# EUROPEAN PATENT SPECIFICATION

(11) **EP 3 485 156 B1**
(45) Date of publication and mention of the grant of the patent: **13.12.2023**
(21) Application number: 17828051.7
(22) Date of filing: 12.05.2017
(51) Int. Cl.: F02G 5/02, B60K 11/02, F01K 23/06, F01K 23/10, F01N 5/02, F01K 23/14, F01K 13/02, F01K 15/02

(54) **A METHOD AND SYSTEM FOR CONTROLLING THE ROTATIONAL SPEED OF AN EXPANDER IN A WASTE HEAT RECOVERY SYSTEM**
VERFAHREN UND SYSTEM ZUR STEUERUNG DER DREHZAHL EINES EXPANDERS IN EINEM ABWÄRMENUTZUNGSSYSTEM
PROCÉDÉ ET SYSTÈME DE COMMANDE DE LA VITESSE DE ROTATION D'UN DÉTENDEUR DANS UN SYSTÈME DE RÉCUPÉRATION DE CHALEUR PERDUE

(30) Priority: 12.07.2016 SE 1651039
(43) Date of publication of application: 22.05.2019
(73) Proprietor: Scania CV AB, 151 87 Södertälje (SE)
(72) Inventor: JOHANSSON, Björn, 125 31 Älvsjö (SE); HÖCKERDAL, Erik, 151 44 Södertälje (SE); TIMREN, Thomas, 619 91 Trosa (SE)
(74) Representative: Scania CV AB
(86) International application number: PCT/SE2017/050484
(87) International publication number: WO 2018/013027

(56) References cited:
- WO-A1-2015/143280
- WO-A1-2016/089277
- JP-A- 2015 059 424
- US-A1- 2006 101 821
- US-A1- 2006 168 963
- US-A1- 2006 174 623
- US-A1- 2009 071 156
- US-A1- 2010 205 959

## Description

### TECHNICAL FIELD

The present invention relates to a method for controlling a waste heat recovery system, a waste heat recovery system and a vehicle comprising such a waste heat recovery system.

### BACKGROUND

Vehicle manufacturers are today striving to increase engine efficiency and reduce fuel consumption. This is specifically an issue for manufacturers of heavy vehicles, such as trucks and buses. In vehicles with combustion engines some of the energy from the fuel is dissipated as heat through the exhaust pipes and the engine cooling system. By the use of a waste heat recovery system some of the dissipated heat may instead be used to produce mechanical work. The mechanical work may for example be transferred to the powertrain and thus be used to propel the vehicle. This way the engine efficiency and the fuel consumption can be improved.

Waste heat recovery systems are typically based on the Rankine cycle and thus comprise a working fluid, a pump for circulating the working fluid in a circuit, at least one evaporator, an expansion device and at least one condenser. The working fluid is suitably in a liquid state to start with. The pump pressurizes the working fluid which is pumped through the evaporator. The working fluid is heated by the heat source (e.g. exhaust gases, cooling fluid) lead through the evaporator and the working fluid thereby evaporates. The vapour is subsequently expanded in the expansion device. By means of the expansion device the recovered heat is converted into mechanical work. The vapour is thereafter cooled in the condenser, such that the working fluid is brought back to its initial liquid state. The condenser is thus typically connected to a cooling circuit, which could be part of the engine cooling system or a separate cooling circuit.

The temperature and pressure of the working fluid are limited by hardware constraints on the high pressure side, i.e. upstream of the expander. The hardware constraints limit the amount of heat that can be handled in the waste heat recovery system. Excessive heat may cause too high pressure of the working fluid upstream of the expander, which may damage the components of the system. If the pressure is too high the working fluid may condensate which for example could damage the expander. In order to avoid too high pressure the exhaust gases are typically bypassed the evaporator, whereby the temperature of the evaporator and thus the working fluid is reduced. Such solution thus results in some exhaust gas energy being wasted.

Other solutions also exist. Document WO2015197086 A1 for example discloses an exhaust gas system comprising a working fluid release means arranged upstream of the expander, such that working fluid can be released to an exhaust gas conveying arrangement in order to reduce the pressure. Document EP1443183 A1 describes a Rankine cycle system associated with an internal combustion engine. The system comprises temperature control means and pressure control means adapted to generate a gas-phase working medium with a temperature and pressure at which the overall efficiency becomes a maximum. The temperature is controlled by controlling the amount of working medium supplied to the evaporator and the pressure is controlled by controlling the rotational speed of the expander.

US 2006/101821 discloses a method for controlling a waste heat recovery system associated with a powertrain of a vehicle, the powertrain comprising a combustion engine.

US 2006/174623 discloses a waste heat recovery method and system.

### SUMMARY OF THE INVENTION

Despite known solutions in the field, there is still a need to develop a method for controlling a waste heat recovery system, which optimizes the energy recovery while increasing the lifetime of the waste heat recovery system.

An object of the present invention is to achieve an advantageous method for controlling a waste heat recovery system, which increases the lifetime of the system.

Another object of the present invention is to achieve an advantageous method for controlling a waste heat recovery system, which optimizes the energy recovery.

A further object of the invention is to achieve an advantageous waste heat recovery system, which is adapted to be controlled such that the lifetime is increased.

Another object of the invention is to achieve an advantageous waste heat recovery system, which optimizes the energy recovery.

The herein mentioned objects are achieved by a method for controlling a waste heat recovery system, a waste heat recovery system, a vehicle, a computer program and a computer program product according to the independent claims.

According to an aspect of the present invention a method for controlling a waste heat recovery system associated with a powertrain of a vehicle according to claim 1 is provided. The powertrain comprises a combustion engine and a gearbox connected to the combustion engine. The waste heat recovery system comprises a working fluid circuit; an evaporator; an expander; a condenser; a reservoir for a working fluid and a pump arranged to pump the working fluid through the circuit, wherein the evaporator is arranged for heat exchange between the working fluid and at least one heat source, wherein the waste heat recovery system further comprises a cooling circuit arranged in connection to the condenser, and wherein the expander is mechanically coupled to the powertrain. The method comprises the steps of:
- determining the pressure and temperature of the working fluid upstream of the expander; and
- controlling the rotational speed of the expander based on the determined pressure and temperature.

The waste heat recovery system of the invention is suitably based on the Rankine cycle, preferably an organic Rankine cycle. The working fluid is thus suitably organic, such as ethanol or acetone. The waste heat recovery system based on the Rankine cycle is suitably configured such that the working fluid, suitably in a liquid state, is pumped through the evaporator. The working fluid is thereby heated by the at least one heat source connected to the evaporator and the working fluid thus evaporates. The vapour is then expanded in the expander whereby mechanical work is produced. The mechanical work is then suitably transferred to the powertrain and is thus used to propel the vehicle. The vapour is thereafter cooled in the condenser by heat exchange with the cooling fluid in the cooling circuit, such that the working fluid is brought back to its initial liquid state. The at least one heat source in the vehicle comprising the waste heat recovery system may be exhaust gases from the combustion engine, an exhaust gas recirculation system, the cooling fluid of the combustion engine, the combustion engine itself or any other hot component in the vehicle. The at least one heat source is preferably associated with the combustion engine. The evaporator is suitably a heat exchanger connected to the at least one heat source and the working fluid circuit. The heat transfer between the working fluid and the heat source is an exchange of energy resulting in a change in temperature. Thus, the heat source is providing the energy entering the waste heat recovery system and the energy is leaving the waste heat recovery system as mechanical work via the expander and as heat via the cooling circuit. The temperature in the waste heat recovery system thus depends on the amount of energy entering the system and the amount of energy leaving the system.

The operating temperature of the waste heat recovery system is normally quite high. For ideal gases the pressure is directly proportional to the temperature and too high temperature of the working fluid may thus cause a too high pressure of the working fluid on the high pressure side of the waste heat recovery system where the working fluid is a vapour. The high pressure side of the waste heat recovery system is downstream of the pump and upstream of the expander. Too high pressure of the working fluid may damage the various components of the system. At too high pressure the working fluid may also shift to a liquid phase and this could damage the expander. The pressure of the working fluid can be decreased or increased by controlling the rotational speed of the expander. When the rotational speed of the expander is increased, the mass flow of the working fluid handled by the expander is increased and the pressure of the working fluid in the circuit upstream of the expander is thereby decreased. By determining the pressure of the working fluid upstream of the expander and controlling the rotational speed of the expander based on the determined pressure, too high pressure upstream of the expander can be avoided. Also, since the temperature of the working fluid is linked to the pressure and affects the working fluid and the components of the system, it is advantageous to control the rotational speed of the expander based on the determined temperature. This way, the energy recovery is optimized and the lifetime of the waste heat recovery system is increased.

The cooling circuit connected to the condenser may be part of the combustion engine cooling system or a separate cooling system. The cooling fluid cooling the condenser may thereby be circulated in the cooling circuit by a cooling pump, driven by the combustion engine or by an electric machine.

The waste heat recovery system may comprise one or more evaporators/heat exchangers. The waste heat recovery system may for example comprise a recuperator arranged to pre-heat the working fluid before entering the evaporator. The waste heat recovery system may also comprise one or more condensers, such that cooling of the working fluid may be performed in multiple steps. Furthermore, the system may comprise one or more expanders. The expander is suitably a fixed displacement expander or a turbine. The expander may be mechanically connected directly to the combustion engine or it may be mechanically connected to the gearbox or other components of the powertrain. This way, the mechanical work generated in the expander is transferred to the powertrain and helps propel the vehicle.

The waste heat recovery system may be associated with a powertrain of a hybrid vehicle. Such hybrid vehicle comprises an electric machine for propulsion, in addition to the combustion engine.

According to the invention the rotational speed of the expander is controlled based on a comparison between the determined pressure and a predetermined maximum pressure and a comparison between a difference between the determined temperature and the boiling point for the working fluid and a predetermined minimum temperature difference. The temperature of the working fluid upstream of the expander is higher than the boiling point when it is a vapour. The boiling point for the working fluid depends on the pressure. The rotational speed of the expander is thus suitably controlled based on a comparison between the determined current pressure and a predetermined maximum pressure, and a comparison between a difference between the determined current temperature and the boiling point for the working fluid at the current pressure and a predetermined minimum temperature difference. The difference between the actual temperature of the working fluid and the boiling point at the current pressure thus indicates the level of superheat of the working fluid. A certain level of superheat is desired in order to obtain optimal efficiency of the expander. The predetermined minimum temperature difference is suitably between 10-60 degrees, preferably between 20-30 degrees. The minimum level of superheat is thus between 10-60 degrees, preferably between 20-30 degrees. It is thus desired that the working fluid has a temperature which is between 10-60 degrees higher than the boiling point of the working fluid. The predetermined maximum pressure suitably depends on constraints of the components of the waste heat recovery system. The predetermined maximum pressure thus depends on the configuration of the waste heat recovery system and may be different for different systems.

According to an aspect of the invention the rotational speed of the expander is increased when the determined pressure exceeds the predetermined maximum pressure and/or the difference between the determined temperature and the boiling point for the working fluid is smaller than the predetermined minimum temperature difference. The rotational speed of the expander is thus suitably increased if the determined level of superheat is lower than the predetermined minimum level of superheat. When the level of superheat of the working fluid is smaller than the predetermined minimum superheat, there is a great risk that the working fluid will shift to liquid phase which may damage the expander. The higher the pressure of the working fluid the higher is the boiling point of the working fluid. Thus, by decreasing the pressure the boiling point of the gas is decreased and the difference between the determined temperature and the boiling point will thereby increase.

According to an aspect of the invention the rotational speed of the expander is increased if there is a risk that the pressure of the working fluid will exceed the predetermined maximum pressure and/or that the difference between the temperature and the boiling point of the working fluid will become smaller than the predetermined minimum temperature difference. By increasing the rotational speed of the expander when there is a risk that the difference between the temperature and the boiling point of the working fluid will become smaller than the predetermined minimum temperature difference, the pressure of the working fluid is pre-emptively decreased and the damage of the waste heat recovery system is avoided while optimizing the energy recovery. Similarly, by increasing the rotational speed of the expander when there is a risk that the pressure will exceed the predetermined maximum pressure the pressure of the working fluid is decreased pre-emptively and damage of the waste heat recovery system is avoided while optimizing the energy recovery.

The risk that the pressure will exceed the predetermined maximum pressure and/or that the difference between the temperature and the boiling point of the working fluid will become smaller than the predetermined minimum temperature difference is suitably determined based on a prediction of high load on the combustion engine. When the load on the combustion engine is high, the temperature of the at least one heat source will increase and the temperature and pressure of the working fluid will thereby also increase. Thus, by predicting that the load on the combustion engine will be high, it is predicted that the temperature and pressure of the working fluid will increase. If the determined temperature and/or pressure of the working fluid is close to the predetermined maximum pressure and the predetermined minimum temperature difference respectively, an increase of load on the combustion engine will thus with great probability cause the pressure to become too high. The high load on the combustion engine may be predicted based on the topography of the route of the vehicle. The load on the combustion engine may for example increase significantly when driving uphill. The risk that the pressure will exceed the predetermined maximum pressure and/or that the difference between the temperature and the boiling point of the working fluid will become smaller than the predetermined minimum temperature difference is thus suitably determined based on the current determined pressure and temperature of the working fluid and/or a prediction of high load on the combustion engine.

According to an aspect of the invention the rotational speed of the expander is controlled by controlling the gearbox and thereby the rotational speed of the powertrain. Since the expander is mechanically connected to the powertrain, the rotational speed of the expander is directly connected to the speed of the powertrain and thus the speed of the combustion engine. The rotational speed of the expander is thus suitably increased by controlling the gearbox to a lower gear. By controlling the gearbox, such that a lower gear is engaged, the speed of the combustion engine/ the powertrain will increase and the rotational speed of the expander will thereby also increase. If the gearbox is controlled to shift to a higher gear, the speed of the combustion engine and the powertrain will decrease, and the rotational speed of the expander will thereby also decrease. In the case where the cooling pump of the cooling circuit is driven by the combustion engine the speed of the cooling pump will increase when the engine speed is increased. Thus, when the gearbox is controlled to a lower gear in order to increase the rotational speed of the expander and thereby decrease the pressure of the working fluid, the speed of the cooling pump will increase. The flow of cooling fluid passing through the condenser will thereby increase and the cooling of the working fluid will increase. Lowering the temperature of the working fluid will decrease the pressure of the working fluid upstream of the expander. This way, increasing of the speed of the powertrain has a double positive effect on the pressure of the working fluid.

According to an aspect of the invention the rotational speed of the expander is controlled based on the combustion engine efficiency, the expander efficiency and/or the gearbox efficiency. The rotational speed of the expander may thus be controlled based on the resulting impact on the overall efficiency of the powertrain. By considering the overall efficiency of the powertrain the rotational speed of the expander can be controlled while obtaining the currently most energy optimal engine speed. The gearbox is thus preferably controlled based on the resulting impact on the combustion engine efficiency, the expander efficiency and/or the gearbox efficiency when controlling the rotational speed of the expander. The method suitably comprises to increase the rotational speed of the expander by controlling the gearbox to a lower gear, only if the negative impact on the overall efficiency of the powertrain is smaller than the increase of energy recovery. That is, if the decrease in overall efficiency of the powertrain will be greater than the increase of recovered energy by shifting to a lower gear, the gearbox will not be controlled to a lower gear. Instead, the at least one heat source will be controlled to bypass the evaporator. By considering the overall efficiency of the powertrain it is ensured that the rotational speed of the expander is controlled, such that the most energy optimal condition prevails in the powertrain.

According to an aspect of the invention a waste heat recovery system associated with a powertrain of a vehicle according to claim 4 is provided. The powertrain comprises
a combustion engine and a gearbox connected to the combustion engine. The waste heat recovery system comprises a working fluid circuit; an evaporator; an expander; a condenser; a reservoir for a working fluid and a pump arranged to pump the working fluid through the circuit, wherein the evaporator is arranged for heat exchange between the working fluid and at least one heat source, and wherein the waste heat recovery system further comprises a cooling circuit arranged in connection to the condenser, and wherein the expander is mechanically coupled to the powertrain. The waste heat recovery system further comprises a control unit adapted to determine the pressure and temperature of the working fluid upstream of the expander; and to control the rotational speed of the expander based on the determined pressure and the temperature.

The control unit is suitably connected to the evaporator, the expander, the pump and the cooling circuit. The control unit is suitably connected to at least one pressure sensor and at least one temperature sensor arranged upstream of the expander on the high pressure side of the waste heat recovery system. The control unit may be the engine control unit or may comprise a plurality of different control units. A computer may be connected to the control unit.

According to the invention the control unit is adapted to control the rotational speed of the expander based on a comparison between the determined pressure and a predetermined maximum pressure and a comparison between the difference between the determined temperature and the boiling point for the working fluid and a predetermined minimum temperature difference. The boiling point for the working fluid is different for different pressure. Also, the boiling point is different for different types of working fluid. The normal boiling point for the working fluid is the boiling point in atmospheric pressure. The boiling point of the working fluid is thus lower than the normal boiling point at a pressure lower than the atmospheric pressure. The boiling point of the working fluid in relation to the pressure is known and is suitably saved in the control unit. The temperature of the working fluid upstream of the expander is higher than the boiling point when it is a vapour irrespective of the type of working fluid. The difference between the actual temperature of the working fluid and the boiling point at the current pressure thus indicates the level of superheat of the working fluid. The control unit is thus suitably adapted to control the rotational speed of the expander based on a comparison between the determined pressure and a predetermined maximum pressure and a comparison between a determined level of superheat and a predetermined minimum level of superheat. A certain level of superheat is desired in order to obtain optimal efficiency of the expander. The predetermined minimum temperature difference is suitably between 10-60 degrees, preferably between 20-30 degrees. The minimum level of superheat is thus between 10-60 degrees, preferably between 20-30 degrees. The predetermined maximum pressure suitably depends on constraints of the components of the waste heat recovery system. The predetermined maximum pressure and the predetermined minimum temperature difference/superheat level are suitably saved in the control unit.

According to an aspect of the invention the control unit is adapted to increase the rotational speed of the expander when the determined pressure exceeds the predetermined maximum pressure and/or the difference between the determined temperature and the boiling point for the working fluid is smaller than the predetermined minimum temperature difference. The control unit may further be adapted to increase the rotational speed of the expander if there is a risk that the pressure will exceed the predetermined maximum pressure and/or that the difference between the temperature and the boiling point for the working fluid will become smaller than the predetermined minimum temperature difference. The control unit is thus suitably adapted to increase the rotational speed of the expander if the determined level of superheat is lower than the predetermined minimum level of superheat. The control unit is suitably adapted to increase the rotational speed of the expander pre-emptively, when there is a risk that the pressure will exceed the predetermined maximum pressure and/or that the difference between the temperature and the boiling point for the working fluid will become smaller than the predetermined minimum temperature difference.

The control unit may be adapted to determine if there is a risk that the pressure will exceed the predetermined maximum pressure and/or that the difference between the temperature and the boiling point of the working fluid will become smaller than the predetermined minimum temperature difference based on a prediction of high load on the combustion engine. The control unit may be adapted to predict a high load on the combustion engine based on the topography of the route of the vehicle. The control unit may be adapted to determine if there is a risk that the pressure will exceed the predetermined maximum pressure and/or that the difference between the temperature and the boiling point of the working fluid will become smaller than the predetermined minimum temperature difference based on the current determined pressure and temperature of the working fluid and/or a prediction of high load on the combustion engine.

According to an aspect of the invention the control unit is adapted to control the rotational speed of the expander by controlling the gearbox and thereby the speed of the powertrain. Since the expander is mechanically connected to the powertrain, the rotational speed of the expander is directly connected to the speed of the powertrain and thus the speed of the combustion engine. The control unit is thus suitably adapted to increase the rotational speed of the expander by controlling the gearbox to a lower gear. By controlling the gearbox, such that a lower gear is engaged, the speed of the combustion engine/ the powertrain will increase and the rotational speed of the expander will thereby also increase and the pressure of the working fluid is decreased.

According to an aspect of the invention the control unit is adapted to control the rotational speed of the expander based on the combustion engine efficiency, the expander efficiency and/or the gearbox efficiency. The control unit is thus adapted to control the rotational speed of the expander based on the resulting impact on the overall efficiency of the powertrain. This way, the rotational speed of the expander can be controlled while obtaining the currently most energy optimal engine speed. The control unit is thus adapted to control the gearbox based on the resulting impact on the combustion engine efficiency, the expander efficiency and/or the gearbox efficiency. The control unit is suitably adapted to increase the rotational speed of the expander by controlling the gearbox to a lower gear, only if the energy recovery gained by changing gear exceeds the negative impact on the overall efficiency of the powertrain. That is, if the decrease in overall efficiency of the powertrain will be greater than the increase of recovered energy by shifting to a lower gear, the control unit is adapted to control the at least one heat source to bypass the evaporator.

Further objects, advantages and novel features of the present invention will become apparent to one skilled in the art from the following details, and also by putting the invention into practice. Whereas the invention is described below, it should be noted that it is not restricted to the specific details described. Specialists having access to the teachings herein will recognise further applications, modifications and incorporations within other fields, which are within the scope of the invention.

### BRIEF DESCRIPTION OF THE DRAWINGS

For fuller understanding of the present invention and further objects and advantages of it, the detailed description set out below should be read together with the accompanying drawings, in which the same reference notations denote similar items in the various drawings, and in which:
- Figure 1: schematically illustrates a vehicle according to an embodiment of the invention;
- Figure 2: schematically illustrates a waste heat recovery system according to an embodiment of the invention;
- Figure 3: illustrates a diagram over the temperature-pressure relationship for working fluids according to an embodiment of the invention;
- Figure 4: schematically illustrates a flow chart for a method for controlling a waste heat recovery system according to an embodiment of the invention; and
- Figure 5: schematically illustrates a control unit or computer according to an embodiment of the invention.

### DETAILED DESCRIPTION OF THE DRAWINGS

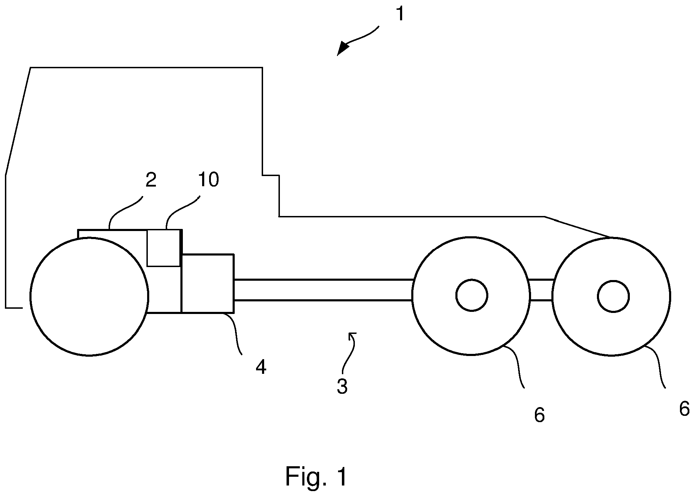

Figure 1 schematically shows a side view of a vehicle 1 according to an embodiment of the invention. The vehicle 1 has a powertrain 3 comprising a combustion engine 2 and a gearbox 4 connected to the combustion engine 2 and the driving wheels 6 of the vehicle 1. The vehicle 1 further comprises a waste heat recovery system 10 associated with the powertrain 3. The vehicle 1 may be a heavy vehicle, e.g. a truck or a bus. The vehicle 1 may alternatively be a passenger car. The vehicle may be a hybrid vehicle comprising an electric machine (not shown) in addition to the combustion engine 2.

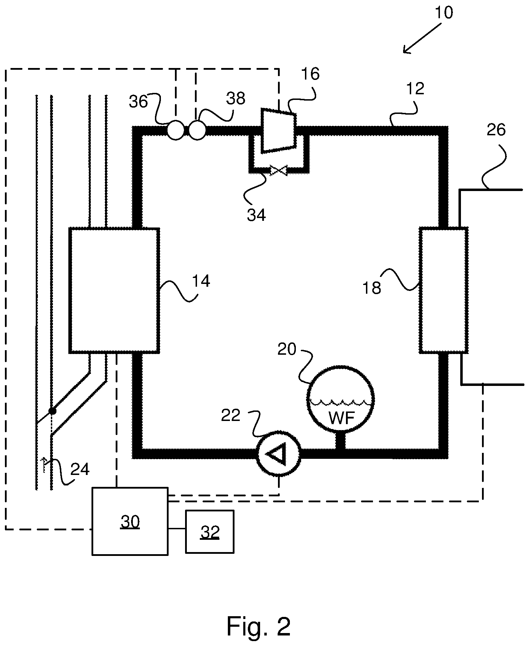

Figure 2 schematically shows a waste heat recovery system 10 associated with a powertrain 3 of a vehicle 1 according to an embodiment of the invention. The vehicle 1 is suitably configured as described in Figure 1. The waste heat recovery system 10 comprises a working fluid circuit 12; an evaporator 14; an expander 16; a condenser 18; a reservoir 20 for a working fluid WF and a pump 22 arranged to pump the working fluid WF through the circuit 12, wherein the evaporator 14 is arranged for heat exchange between the working fluid WF and at least one heat source 24, wherein the waste heat recovery system 10 further comprises a cooling circuit 26 arranged in connection to the condenser 18 and wherein the expander 16 is mechanically connected to the powertrain 3.

The waste heat recovery system 10 comprises a control unit 30 adapted to determine the pressure P and temperature T of the working fluid WF upstream of the expander 16 and to control the rotational speed of the expander 16 based on the determined pressure P and temperature T. A computer 32 may be connected to the control unit 30. The waste heat recovery system 10 further comprises at least one pressure sensor 36 and at least one temperature sensor 38 for determining the current pressure P and the current temperature T of the working fluid WF. The at least one pressure sensor 36 and the at least one temperature sensor 38 are suitably arranged in communication with the working fluid circuit 12 upstream of the expander 18 and downstream of the pump 22. The control unit 30 is arranged in connection to the evaporator 14, the expander 16, the cooling circuit 26, the pump 22, the at least one pressure sensor 36 and the at least one temperature sensor 38.

The at least one heat source 24 connected to the evaporator 14 may be exhaust gases from the combustion engine 2, an exhaust gas recirculation system (EGR), the cooling fluid of the combustion engine 2, the combustion engine 2 itself or any other hot component associated with the combustion engine 2. The at least one heat source 24 is herein illustrated as a medium passing through the evaporator 14. The at least one heat source 24 is herein illustrated as arrows and may be exhaust gases from the combustion engine 2. The waste heat recovery system 10 may comprise a plurality of heat sources 24. The evaporator 14 is suitably a heat exchanger connected to the at least one heat source 24 and the working fluid circuit 12. The heat transfer between the working fluid WF and the heat source 24 is an exchange of energy resulting in a change in temperature. The waste heat recovery system 10 is suitably based on an organic Rankine cycle. The working fluid WF is thus suitably organic, such as ethanol or acetone. The waste heat recovery system 10 is thus configured such that the liquid working fluid WF is pumped from low pressure to high pressure and enters the evaporator 14. The working fluid WF is thereby heated by the at least one heat source 24 connected to the evaporator 14 and the working fluid WF is thus evaporated. The vapour is then expanded in the expander 16 whereby mechanical work is produced and transferred to the powertrain 3, whereby the temperature and the pressure of the vapour is decreased. The vapour thereafter enters the condenser 18 where condensation through heat exchange between the vapour and the cooling fluid of the cooling circuit 26 brings the working fluid WF back to its initial liquid state. Thus, the heat source 24 is providing the energy entering the waste heat recovery system 10 and the energy is leaving the waste heat recovery system 10 as mechanical work via the expander 16 and as heat via the cooling circuit 26 cooling the condenser 18. The temperature of the working fluid WF in the waste heat recovery system 10 thus depends on the amount of energy entering the system 10 and the amount of energy leaving the system 10.

Only vapour should enter the expander 16 and the waste heat recovery system 10 therefore comprises a bypass arrangement 34, such that in the case where the working fluid WF is still in a liquid state downstream of the evaporator 14, the working fluid WF is bypassing the expander 16 through the bypass arrangement 34. The expander 16 is suitably a fixed displacement expander, such a piston expander. The expander 16 may be mechanically connected directly to the combustion engine 2 or to the gearbox 4.

The pump 22 pressurizing and circulating the working fluid WF through the circuit 12 may be damaged if the working fluid WF entering the pump 22 is not in a liquid state. Thus in the case where the temperature downstream of the condenser 18 is too high, such that the working fluid WF is not in a liquid state, the pressure in the reservoir 20 may be increased. This way, the working fluid WF is brought to a liquid state and may be pumped by the pump 22. The pump 22 is suitably electrically driven.

The cooling circuit 26 connected to the condenser 18 may be part of the combustion engine cooling system or a separate cooling system. The cooling fluid in the cooling circuit 26 may thereby be pumped by a cooling pump (not shown) driven by the combustion engine 2 or by an electric machine (not shown).

The waste heat recovery system 10 may comprise one or more heat exchangers 14. The waste heat recovery system 10 may for example comprise a recuperator arranged to pre-heat the working fluid WF before entering the evaporator 14. The waste heat recovery system 10 may also comprise one or more condensers 18, such that cooling down of the working fluid WF may be performed in multiple steps. Furthermore, the system 10 may comprise one or more expanders 16.

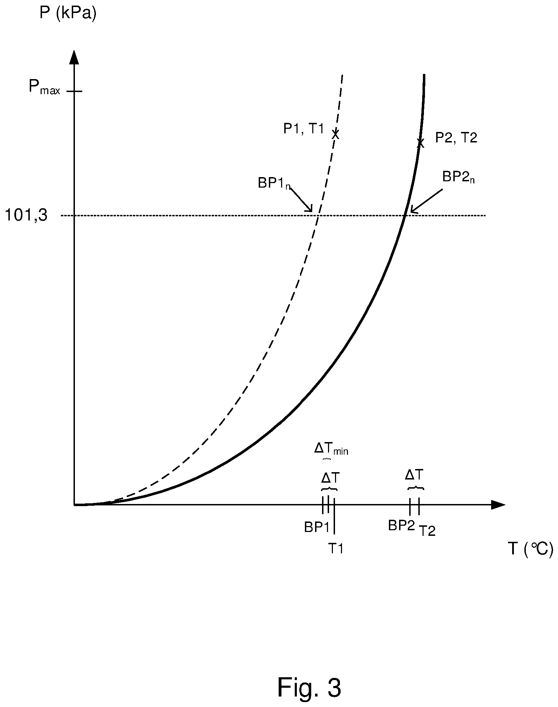

Figure 3 shows a diagram over the relationship between temperature T and pressure P for working fluids WF according to an embodiment of the invention. Two different working fluids WF are illustrated in this diagram and just as an example the solid line may represent ethanol and the dashed line may represent acetone. Any of the working fluids WF may constitute the working fluid in the waste heat recovery system 10 as disclosed in Figure 2. The diagram shows the normal boiling point BP1n, BP2n for the respective working fluid. The normal boiling point is the temperature at which the working fluid WF evaporates in atmospheric pressure. The relationship between temperature T and pressure P is thus different for different types of working fluid WF. The boiling point BP for a working fluid WF varies with the pressure P. If the pressure increases, the boiling point BP increases.

The diagram further illustrates the temperature difference ΔT between a determined temperature T1, T2 and the boiling point BP1, BP2 at the determined pressure P1, P2 for the respective working fluid WF. This temperature difference ΔT is also called the level of superheat. A certain level of superheat is desired in the waste heat recovery system 10 in order to obtain optimal efficiency of the expander 16. The diagram shows the desired level of superheat defined as a predetermined minimum temperature difference ΔTₘᵢₙ, for the working fluid WF illustrated as a dashed line. The predetermined minimum temperature difference ΔTₘᵢₙ is suitably between 10-60 degrees, preferably between 20-30 degrees. The components of the waste heat recovery system 10 set a constraint on the maximum pressure Pₘₐₓ of the working fluid WF that the system 10 can handle without problems. If the pressure P of the working fluid WF is higher than the maximum pressure Pₘₐₓ on the high pressure side of the waste heat recovery system 10, the various components may be damaged. Such maximum pressure Pₘₐₓ is predetermined for the relevant waste heat recovery system 10.

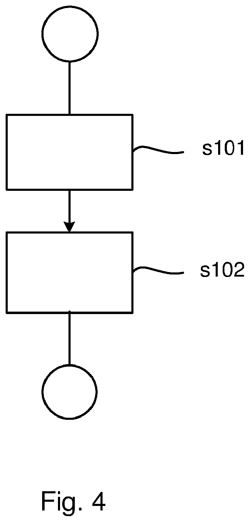

Figure 4 shows a flowchart for a method for controlling a waste heat recovery system 10 associated with a powertrain 3 of a vehicle 1. The powertrain 3 comprises a combustion engine 2 and a gearbox 4 connected to the combustion engine 2. The waste heat recovery system 10 comprises a working fluid circuit 12; an evaporator 14; an expander 16; a condenser 18; a reservoir 20 for a working fluid WF and a pump 22 arranged to pump the working fluid WF through the circuit 12, wherein the evaporator 14 is arranged for heat exchange between the working fluid WF and at least one heat source 24, wherein the waste heat recovery system 10 further comprises a cooling circuit 26 arranged in connection to the condenser 18, and wherein the expander 16 is mechanically coupled to the powertrain 3. The method comprises the steps of:
- determining s101 the pressure P and temperature T of the working fluid WF upstream of the expander 16; and
- controlling s102 the rotational speed of the expander 16 based on the determined pressure P and temperature T.

The waste heat recovery system 10 is suitably configured as disclosed in Figure 2, wherein the control unit 30 is adapted to perform the method steps described herein.

The rotational speed of the expander 16 may be controlled based on a comparison between the determined pressure P and a predetermined maximum pressure Pₘₐₓ and a comparison between a difference between the determined temperature and the boiling point for the working fluid ΔT and a predetermined minimum temperature difference ΔTₘᵢₙ. The temperature T of the working fluid WF upstream of the expander 16 is higher than the boiling point BP when it is a vapour. The boiling point BP for the working fluid WF depends on the pressure P. The difference between the actual temperature of the working fluid and the boiling point ΔT at the current pressure P thus indicates the level of superheat of the working fluid WF. An example of the relationship between the pressure P and temperature T of the working fluid is illustrated in Figure 3.

The rotational speed of the expander 16 is suitably increased when the determined pressure P exceeds the predetermined maximum pressure Pₘₐₓ and/or the difference between the determined temperature and the boiling point for the working fluid ΔT is smaller than the predetermined minimum temperature difference ΔTₘᵢₙ. When the rotational speed of the expander 16 is increased a greater mass flow of working fluid WF can be handled by the expander 16 and the pressure of the working fluid WF in the circuit 12 upstream of the expander 16 will decrease. When the temperature difference ΔT is smaller than the predetermined minimum temperature difference ΔTₘᵢₙ, there is a great risk that the working fluid WF will shift to liquid phase which may damage the expander 16. The higher the pressure P of the working fluid WF the higher is the boiling point BP of the working fluid WF. Thus, by decreasing the pressure P the boiling point BP of the vapour is decreased and the difference between the determined temperature and the boiling point ΔT will thereby increase.

The rotational speed of the expander 16 may be increased if there is a risk that the pressure P of the working fluid WF will exceed the predetermined maximum pressure Pₘₐₓ and/or that the difference between the temperature and the boiling point of the working fluid ΔT will become smaller than the predetermined minimum temperature difference ΔTₘᵢₙ. The rotational speed of the expander 16 is thus suitably increased if the determined level of superheat is lower than the predetermined minimum level of superheat. This way, the pressure P of the working fluid WF is pre-emptively decreased and the damage of the waste heat recovery system 10 is avoided while optimizing the energy recovery.

The risk that the pressure P will exceed the predetermined maximum pressure Pₘₐₓ and/or that the difference between the temperature and the boiling point of the working fluid ΔT will become smaller than the predetermined minimum temperature difference ΔTₘᵢₙ may be determined based on a prediction of high load on the combustion engine 2. When the load on the combustion engine 2 is high, the temperature of the at least one heat source 24 will increase and the temperature T and pressure P of the working fluid WF will thereby also increase. Thus, by predicting that the load on the combustion engine 2 will be high, it is predicted that the temperature T and pressure P of the working fluid WF will increase. The high load on the combustion engine 2 may be predicted based on the topography of the route of the vehicle 1.

The rotational speed of the expander 16 may be controlled by controlling the gearbox 4 and thereby the rotational speed of the powertrain 3. Since the expander 16 is mechanically connected to the powertrain 3, the rotational speed of the expander 16 is directly connected to the speed of the powertrain 3 and thus the speed of the combustion engine 2. The rotational speed of the expander 16 is thus suitably increased by controlling the gearbox 4 to a lower gear. By controlling the gearbox 4, such that a lower gear is engaged, the speed of the combustion engine 2/ the powertrain 3 will increase and the rotational speed of the expander 16 will thereby also increase. If the gearbox 4 is controlled to shift to a higher gear, the speed of the combustion engine 2 and the powertrain 3 will decrease, and the rotational speed of the expander 16 will thereby also decrease.

The rotational speed of the expander 16 may be controlled based on the combustion engine efficiency, the expander efficiency and/or the gearbox efficiency. The rotational speed of the expander 16 may thus be controlled based on the resulting impact on the overall efficiency of the powertrain 3. By considering the overall efficiency of the powertrain 3 the rotational speed of the expander 16 can be controlled while obtaining the currently most energy optimal engine speed. The gearbox 4 is thus preferably controlled based on the resulting impact on the combustion engine efficiency, the expander efficiency and/or the gearbox efficiency when controlling the rotational speed of the expander.

The method may comprise to increase the rotational speed of the expander 16 by controlling the gearbox 4 to a lower gear, only if the resulting negative impact on the overall efficiency of the powertrain 3 is smaller than the resulting increase of energy recovery. That is, if the decrease in overall efficiency of the powertrain 3 will be greater than the increase of recovered energy by shifting to a lower gear, the gearbox 4 will not be controlled to a lower gear. Instead, the at least one heat source 24 will be controlled to bypass the evaporator 14.

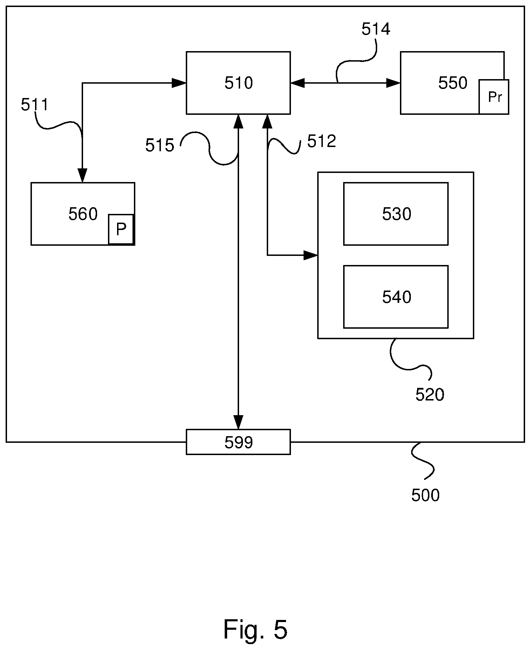

Figure 5 schematically illustrates a device 500. The control unit 30 and/or computer 32 described with reference to Figure 2 may in a version comprise the device 500. The term "link" refers herein to a communication link which may be a physical connection such as an optoelectronic communication line, or a non-physical connection such as a wireless connection, e.g. a radio link or microwave link. The device 500 comprises a non-volatile memory 520, a data processing unit 510 and a read/write memory 550. The non-volatile memory 520 has a first memory element 530 in which a computer program, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

There is provided a computer program P which comprises routines for a method for controlling a waste heat recovery system 10 associated with a powertrain 3 of a vehicle 1 according to the invention. The computer program P comprises routines for determining a pressure P and temperature T of the working fluid WF upstream of the expander 16. The computer program P comprises routines for controlling the rotational speed of the expander 16 based on the determined pressure P and temperature T. The computer program P comprises routines for controlling the rotational speed of the expander 16 based on a comparison between the determined pressure P and a predetermined maximum pressure Pₘₐₓ and a comparison between a difference between the determined temperature and the boiling point for the working fluid ΔT and a predetermined minimum temperature difference ΔTₘᵢₙ. The computer program P comprises routines for increasing the rotational speed of the expander 16 when the determined pressure P exceeds the predetermined maximum pressure Pₘₐₓ and/or the difference between the determined temperature and the boiling point for the working fluid ΔT is smaller than the predetermined minimum temperature difference ΔTₘᵢₙ. The computer program P comprises routines for increasing the rotational speed of the expander 16 if there is a risk that the pressure P of the working fluid WF will exceed the predetermined maximum pressure Pₘₐₓ and/or that the difference between the temperature and the boiling point of the working fluid ΔT will become smaller than the predetermined minimum temperature difference ΔTₘᵢₙ. The computer program P comprises routines for controlling the rotational speed of the expander by controlling the gearbox 4 and thereby the rotational speed of the powertrain 3. The computer program P comprises routines for controlling the rotational speed of the expander 16 based on the combustion engine efficiency, the expander efficiency and/or the gearbox efficiency. The program P may be stored in an executable form or in a compressed form in a memory 560 and/or in a read/write memory 550.

Where the data processing unit 510 is described as performing a certain function, it means that the data processing unit 510 effects a certain part of the program stored in the memory 560 or a certain part of the program stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicating with the data processing unit 510 via a data bus 514.

When data are received on the data port 599, they are stored temporarily in the second memory element 540. When input data received have been temporarily stored, the data processing unit 510 is prepared to effect code execution as described above.

Parts of the methods herein described may be effected by the device 500 by means of the data processing unit 510 which runs the program stored in the memory 560 or the read/write memory 550. When the device 500 runs the program, methods herein described are executed.

The foregoing description of the preferred embodiments of the present invention is provided for illustrative and descriptive purposes. It is not intended to be exhaustive or to restrict the invention to the variants described. Many modifications and variations will obviously be apparent to one skilled in the art. The embodiments have been chosen and described in order best to explain the principles of the invention and its practical applications and hence make it possible for specialists to understand the invention for various embodiments and with the various modifications appropriate to the intended use.

## Claims

1. A method for controlling a waste heat recovery system (10) associated with a powertrain (3) of a vehicle (1), the powertrain (3) comprising a combustion engine (2) and a gearbox (4) connected to the combustion engine (2), the waste heat recovery system (10) comprising a working fluid circuit (12); an evaporator (14); an expander (16); a condenser (18); a reservoir (20) for a working fluid (WF) and a pump (22) arranged to pump the working fluid (WF) through the circuit (12), wherein the evaporator (14) is arranged for heat exchange between the working fluid (WF) and at least one heat source (24), wherein the waste heat recovery system (10) further comprises a cooling circuit (26) arranged in connection to the condenser (18), and wherein the expander (16) is mechanically coupled to the powertrain (3), the method comprising the steps of:
- determining (s101) the pressure (P) and temperature (T) of the working fluid (WF) upstream of the expander (16);
- controlling (s102) the rotational speed of the expander (16) based on the determined pressure (P) and temperature (T),
**characterized in that**
the rotational speed of the expander (16) is controlled based on a comparison between the pressure (P) and a predetermined maximum pressure (Pₘₐₓ) and a comparison between a difference (ΔT) between the temperature (T) and the boiling point (BP) for the working fluid (WF) and a predetermined minimum temperature difference (ΔTₘᵢₙ).

2. The method according to any of the preceding claims, **wherein** the rotational speed of the expander (16) is controlled by controlling the gearbox (4) and thereby the speed of the powertrain (3).

3. The method according to any of the preceding claims, **wherein** the rotational speed of the expander (16) is controlled based on the combustion engine efficiency, the expander efficiency and/or the gearbox efficiency.

4. A waste heat recovery system associated with a powertrain (3) of a vehicle (1), the powertrain (3) comprising a combustion engine (2) and a gearbox (4) connected to the combustion engine (2), the waste heat recovery system (10) comprising a working fluid circuit (12); an evaporator (14); an expander (16); a condenser (18); a reservoir (20) for a working fluid (WF) and a pump (22) arranged to pump the working fluid (WF) through the circuit (12), wherein the evaporator (14) is arranged for heat exchange between the working fluid (WF) and at least one heat source (24), and wherein the waste heat recovery system (10) further comprises a cooling circuit (26) arranged in connection to the condenser (18), and wherein the expander (16) is mechanically coupled to the powertrain (3), and wherein the waste heat recovery system (10) comprises a control unit (30) adapted to determine the pressure (P) and temperature (T) of the working fluid (WF) upstream of the expander (16); and to control the rotational speed of the expander (16) based on the determined pressure (P) and the temperature (T),
**characterized in that**
the control unit (30) is adapted to control the rotational speed of the expander based on a comparison between the pressure (P) and a predetermined maximum pressure (Pₘₐₓ) and a comparison between the difference (ΔT) between the temperature (T) and the boiling point (BP) for the working fluid (WF) and a predetermined minimum temperature difference (ΔTₘᵢₙ).

5. The system according to claim 4, **wherein** the control unit (30) is adapted to control the rotational speed of the expander (16) by controlling the gearbox (4) and thereby the speed of the powertrain (3).

6. The system according to any of claims 4-5, **wherein** the predetermined maximum pressure (Pₘₐₓ) depend on constraints of the components of the waste heat recovery system (10).

7. The system according to any of claims 4-6, **wherein** the predetermined minimum temperature difference (ΔTₘᵢₙ) is between 10-60 degrees, preferably 20-30 degrees.

8. The system according to any of claims 4-7, **wherein** the control unit (30) is adapted to control the rotational speed of the expander (16) based on the combustion engine efficiency, the expander efficiency and/or the gearbox efficiency.

9. A vehicle, **characterized in that** it comprises a waste heat recovery system (10) according to any of the claims 4-8.

## Patentansprüche

1. Verfahren zum Steuern eines Abwärmenutzungssystems (10), das einem Antriebsstrang (3) eines Fahrzeugs (1) zugeordnet ist, wobei der Antriebsstrang (3) einen Verbrennungsmotor (2) und ein mit dem Verbrennungsmotor (2) verbundenes Getriebe (4) umfasst, wobei das Abwärmenutzungssystem (10) umfasst: einen Arbeitsfluidkreislauf (12); einen Verdampfer (14); einen Expander (16); einen Kondensator (18); ein Reservoir (20) für ein Arbeitsfluid (WF) und eine Pumpe (22), die angeordnet ist, um das Arbeitsfluid (WF) durch den Kreislauf (12) zu pumpen, wobei der Verdampfer (14) für einen Wärmeaustausch zwischen dem Arbeitsfluid (WF) und wenigstens einer Wärmequelle (24) angeordnet ist, wobei das Abwärmenutzungssystem (10) ferner einen Kühlkreislauf (26) umfasst, der in Verbindung mit dem Kondensator (18) angeordnet ist, und wobei der Expander (16) mechanisch mit dem Antriebsstrang (3) gekoppelt ist, wobei das Verfahren die folgenden Schritte umfasst:
- Bestimmen (s101) des Drucks (P) und der Temperatur (T) des Arbeitsfluids (WF) stromaufwärts des Expanders (16);
- Steuern (s102) der Drehzahl des Expanders (16) anhand des bestimmten Drucks (P) und der bestimmten Temperatur (T),
**dadurch gekennzeichnet, dass**
die Drehzahl des Expanders (16) anhand eines Vergleichs zwischen dem Druck (P) und einem vorbestimmten Maximaldruck (Pₘₐₓ) und eines Vergleichs zwischen einer Differenz (ΔT) zwischen der Temperatur (T) und dem Siedepunkt (BP) für das Arbeitsfluid (WF) und einer vorbestimmten Mindesttemperaturdifferenz (ΔTₘᵢₙ) gesteuert wird.

2. Verfahren nach einem der vorangehenden Ansprüche, **wobei** die Drehzahl des Expanders (16) durch Steuern des Getriebes (4) und somit der Drehzahl des Antriebsstrangs (3) gesteuert wird.

3. Verfahren nach einem der vorangehenden Ansprüche, **wobei** die Drehzahl des Expanders (16) anhand des Wirkungsgrades des Verbrennungsmotors, des Wirkungsgrades des Expanders und/oder des Wirkungsgrades des Getriebes gesteuert wird.

4. Abwärmenutzungssystem, das einem Antriebsstrang (3) eines Fahrzeugs (1) zugeordnet ist, wobei der Antriebsstrang (3) einen Verbrennungsmotor (2) und ein mit dem Verbrennungsmotor (2) verbundenes Getriebe (4) umfasst, wobei das Abwärmenutzungssystem (10) umfasst: einen Arbeitsfluidkreislauf (12); einen Verdampfer (14); einen Expander (16); einen Kondensator (18); ein Reservoir (20) für ein Arbeitsfluid (WF) und eine Pumpe (22), die angeordnet ist, um das Arbeitsfluid (WF) durch den Kreislauf (12) zu pumpen, wobei der Verdampfer (14) für einen Wärmeaustausch zwischen dem Arbeitsfluid (WF) und wenigstens einer Wärmequelle (24) angeordnet ist, und wobei das Abwärmenutzungssystem (10) ferner einen Kühlkreislauf (26) umfasst, der in Verbindung mit dem Kondensator (18) angeordnet ist, und wobei der Expander (16) mechanisch mit dem Antriebsstrang (3) gekoppelt ist, und wobei das Abwärmenutzungssystem (10) eine Steuereinheit (30) umfasst, die dazu angepasst ist, den Druck (P) und die Temperatur (T) des Arbeitsfluids (WF) stromaufwärts des Expanders (16) zu bestimmen und die Drehzahl des Expanders (16) anhand des bestimmten Drucks (P) und der bestimmten Temperatur (T) zu steuern,
**dadurch gekennzeichnet, dass**
die Steuereinheit (30) dazu angepasst ist, die Drehzahl des Expanders anhand eines Vergleichs zwischen dem Druck (P) und einem vorbestimmten Maximaldruck (Pₘₐₓ) und eines Vergleichs zwischen einer Differenz (ΔT) zwischen der Temperatur (T) und dem Siedepunkt (BP) für das Arbeitsfluid (WF) und einer vorbestimmten Mindesttemperaturdifferenz (ΔTₘᵢₙ) zu steuern.

5. System nach Anspruch 4, **wobei** die Steuereinheit (30) dazu angepasst ist, die Drehzahl des Expanders (16) durch Steuern des Getriebes (4) und somit der Drehzahl des Antriebsstrangs (3) zu steuern.

6. System nach einem der Ansprüche 4-5, **wobei** der vorbestimmte Maximaldruck (Pₘₐₓ) von Einschränkungen der Komponenten des Abwärmenutzungssystems (10) abhängt.

7. System nach einem der Ansprüche 4-6, **wobei** die vorbestimmte Mindesttemperaturdifferenz (ΔTₘᵢₙ) zwischen 10 und 60 Grad, vorzugsweise zwischen 20 und 30 Grad, beträgt.

8. System nach einem der Ansprüche 4-7, **wobei** die Steuereinheit (30) dazu angepasst ist, die Drehzahl des Expanders (16) anhand des Wirkungsgrades des Verbrennungsmotors, des Wirkungsgrades des Expanders und/oder des Wirkungsgrades des Getriebes zu steuern.

9. Fahrzeug, **dadurch gekennzeichnet, dass** es ein Abwärmenutzungssystem (10) nach einem der Ansprüche 4-8 umfasst.

## Revendications

1. Procédé de commande d'un système de récupération de chaleur perdue (10) associé à un groupe motopropulseur (3) d'un véhicule (1), le groupe motopropulseur (3) comprenant un moteur à combustion (2) et une boîte de vitesse (4) raccordée au moteur à combustion (2), le système de récupération de chaleur perdue (10) comprenant un circuit de fluide de travail (12) ; un évaporateur (14) ; un expanseur (16) ; un condenseur (18) ; un réservoir (20) pour le fluide de travail (WF) et une pompe (22) agencés pour pomper le fluide de travail (WF) à travers le circuit (12), dans lequel l'évaporateur (14) est agencé pour un échange de chaleur entre le fluide de travail (WF) et au moins une source de chaleur (24), dans lequel le système de récupération de chaleur perdue (10) comprend en outre un circuit de refroidissement (26) agencé en raccordement au condenseur (18), et dans lequel l'expanseur (16) est couplé mécaniquement au groupe motopropulseur (3), le procédé comprenant les étapes consistant à :
- déterminer (s101) la pression (P) et la température (T) du fluide de travail (WF) en amont de l'expanseur (16) ;
- commander (s102) la vitesse de rotation de l'expanseur (16) sur la base de la pression (P) et de la température (T) déterminées,
**caractérisé en ce que**
la vitesse de rotation de l'expanseur (16) est commandée sur la base d'une comparaison entre la pression (P) et une pression maximale prédéterminée (Pₘₐₓ) et d'une comparaison entre une différence (ΔT) entre la température (T) et le point d'ébullition (BP) pour le fluide de travail (WF) et une différence de température minimale prédéterminée (ΔTₘᵢₙ).

2. Procédé selon l'une quelconque des revendications précédentes, **dans lequel** la vitesse de rotation de l'expanseur (16) est commandée en commandant la boîte de vitesses (4) et par conséquent la vitesse du groupe motopropulseur (3).

3. Procédé selon l'une quelconque des revendications précédentes, **dans lequel** la vitesse de rotation de l'expanseur (16) est commandée sur la base du rendement du moteur à combustion, du rendement de l'expanseur et/ou du rendement de la boîte de vitesses.

4. Système de récupération de chaleur perdue associé à un groupe motopropulseur (3) d'un véhicule (1), le groupe motopropulseur (3) comprenant un moteur à combustion (2) et une boîte de vitesse (4) raccordée au moteur à combustion (2), le système de récupération de chaleur perdue (10) comprenant un circuit de fluide de travail (12) ; un évaporateur (14) ; un expanseur (16) ; un condenseur (18) ; un réservoir (20) pour le fluide de travail (WF) et une pompe (22) agencés pour pomper le fluide de travail (WF) à travers le circuit (12), dans lequel l'évaporateur (14) est agencé pour un échange de chaleur entre le fluide de travail (WF) et au moins une source de chaleur (24), et dans lequel le système de récupération de chaleur perdue (10) comprend en outre un circuit de refroidissement (26) agencé en raccordement au condenseur (18), et dans lequel l'expanseur (16) est couplé mécaniquement au groupe motopropulseur (3), et dans lequel le système de récupération de chaleur perdue (10) comprend une unité de commande (30) adaptée pour déterminer la pression (P) et la température (T) du fluide de travail (WF) en amont de l'expanseur (16) ; et pour commander la vitesse de rotation de l'expanseur (16) sur la base de la pression déterminée (P) et de la température (T),
**caractérisé en ce que**
l'unité de commande (30) est adaptée pour commander la vitesse de rotation de l'expanseur sur la base d'une comparaison entre la pression (P) et une pression maximale prédéterminée (Pₘₐₓ) et d'une comparaison entre la différence (ΔT) entre la température (T) et le point d'ébullition (BP) pour le fluide de travail (WF) et une différence de température minimale prédéterminée (ΔTₘᵢₙ).

5. Système selon la revendication 4, **dans lequel** l'unité de commande (30) est adaptée pour commander la vitesse de rotation de l'expanseur (16) en commandant la boîte de vitesses (4) et par conséquent la vitesse du groupe motopropulseur (3).

6. Système selon l'une quelconque des revendications 4 et 5, **dans lequel** la pression maximale prédéterminée (Pₘₐₓ) dépend des contraintes des composants du système de récupération de chaleur perdue (10).

7. Système selon l'une quelconque des revendications 4 à 6, **dans lequel** la différence de température minimale prédéterminée (ΔTₘᵢₙ) est entre 10-60 degrés, de préférence 20-30 degrés.

8. Système selon l'une quelconque des revendications 4 à 7, **dans lequel** l'unité de commande (30) est adaptée pour commander la vitesse de rotation de l'expanseur (16) sur la base du rendement du moteur à combustion, du rendement de l'expanseur et/ou du rendement de la boîte de vitesses.

9. Véhicule, **caractérisé en ce qu'**il comprend un système de récupération de chaleur perdue (10) selon l'une quelconque des revendications 4 à 8.
